# EUROPÄISCHE PATENTSCHRIFT

(11) **EP 2 742 105 B1**
(45) Veröffentlichungstag und Bekanntmachung des Hinweises auf die Patenterteilung: **27.05.2015**
(21) Anmeldenummer: 12745466.8
(22) Anmeldetag: 02.08.2012
(51) Int. Cl.: C09J 7/00, C09J 7/02, B65H 75/00

(54) **VERFAHREN ZUR HERSTELLUNG EINES KLEBEBANDS MIT ÜBERSTEHENDEM LINER**
METHOD FOR PRODUCING AN ADHESIVE TAPE WITH A PROTRUDING LINER
PROCÉDÉ DE FABRICATION D'UNE BANDE ADHÉSIVE MUNIE D'UN REVÊTEMENT EN SAILLIE

(30) Priorität: 10.08.2011 DE 102011080760
(43) Veröffentlichungstag der Anmeldung: 18.06.2014
(73) Patentinhaber: Tesa SE, 20253 Hamburg (DE)
(72) Erfinder: TACH, Michael, 22549 Hamburg (DE); GABRIEL, Markus, 22459 Hamburg (DE); EHLERS, Bruce Dirk, 22547 Hamburg (DE)
(86) Internationale Anmeldenummer: PCT/EP2012/065154
(87) Internationale Veröffentlichungsnummer: WO 2013/020891

(56) Entgegenhaltungen:
- EP-A1- 0 928 822
- EP-A2- 1 035 185

## Beschreibung

Die Erfindung betrifft ein Verfahren zur Herstellung einer kreuzgewickelten Langrolle eines Klebebands mit überstehendem Liner.

Klebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die (Haft)klebemassen miteinander in Kontakt kommen, oder um bei einseitig klebenden Klebebändern eine Verklebung der (Haft)Klebemasse auf dem Träger zu verhindern, werden die Klebebänder vor dem Wickeln auf ein Abdeckmaterial (auch als Trennmaterial bezeichnet) aufgebracht, das zusammen mit dem Klebeband aufgewickelt wird. Dem Fachmann sind derartige Abdeckmaterialien unter den Namen Releaseliner oder Liner bekannt. Neben der Abdeckung von ein- oder doppelseitig klebenden Klebebändern werden Liner auch zur Eindeckung von Etiketten eingesetzt.

Ein Liner (Trennpapier, Trennfolie) ist nicht Bestandteil eines Klebebandes oder Etiketts, sondern nur ein Hilfsmittel zu deren Herstellung, Lagerung oder für die Weiterverarbeitung zum Beispiel durch Stanzen. Darüber hinaus ist ein Liner im Gegensatz zu einem Klebebandträger nicht fest mit einer Klebstoffschicht verbunden.

Wird ein doppelseitig klebendes, mit einem Liner ausgerüstetes Klebeband abgerollt, wird es normalerweise mit der offenen, also linerfreien Haftklebemassenseite auf einen Untergrund aufgeklebt. Die andere Haftklebemassenseite haftet währenddessen auf der beschichteten Oberfläche des Liners noch in genügendem Maße, um die Handhabung des Klebebands zu ermöglichen.

Der Liner ist vom Klebeband abziehbar, wobei durch den Liner selbst oder durch das Abziehen des Liners die Klebkraft der Klebemasse nicht wesentlich für die spätere Verwendung beeinträchtigt werden sollte.

Bei der Herstellung von Linern werden die Träger auf Papier- oder Folienbasis üblicherweise mit einer abhäsiven Beschichtung (Release- oder Trennbeschichtung) ausgerüstet, um die Adhäsionsneigung der Klebemasse gegenüber diesen Oberflächen zu verringern. Die Ausrüstung erfolgt dabei bevorzugt beidseitig.

Als Release- oder Trennbeschichtung werden häufig vernetzbare Silikonsysteme eingesetzt. Dazu zählen Mischungen aus Vernetzungskatalysatoren und so genannten thermisch härtbaren kondensations- oder additionsvernetzenden Polysiloxanen. Für kondensationsvernetzende Silikonsysteme sind als Vernetzungskatalysatoren häufig Zinnverbindungen wie Dibutlyzindiacetat in der Masse zugegen.

Im Folgenden werden das Abdeckmaterial oder das Trennmaterial einheitlich als Liner bezeichnet.

Ein Problem bei vielen Linern besteht darin, dass sich diese von der mit ihnen eingedeckten Klebemasse nur schwer lösen lassen. Dies Problem tritt insbesondere dann in Erscheinung, wenn die Breite des Liners der Breite der eingedeckten Klebemasse entspricht, so dass der Liner nicht übersteht. Dann kann es sich als schwierig erweisen, zum Ablösen wenigstens ein Stück des Liners zu ergreifen. Insbesondere bei der maschinellen Weiterverarbeitung der eingedeckten Klebebänder kann es zwingend erforderlich sein, dass sich ein Liner problemlos ausdecken lässt.

Zur Erleichterung der Handhabung derartiger Klebemasse/Liner-Kombination werden Liner aufgebracht, die eine größere Breite als die einzudeckende Klebemasse haben. Es ergibt sich ein überstehender Liner, der ein besseres Ablösen des Liners von der Klebemasse ermöglicht, weil der überstehende Bereich des Liners als Anfasserlasche dient.

Gleichzeitig wird ein anderes Problem vieler Klebebandrollen gelöst, nämlich die Seitenkantenklebrigkeit. Wenn Klebebandrollen mit ihrer flachen Seite auf einen Untergrund gelegt werden, kann es vorkommen, dass die Rolle aufgrund des Kontakts zwischen Klebemasse und Untergrund mit dem Untergrund verklebt. Diese Seitenkantenklebrigkeit kann besonders bei dicken oder bei sehr klebrigen Klebmasseschichten darüber hinaus dazu führen, dass die Wickellagen der Klebebandrolle miteinander verkleben und sich das Klebeband damit nicht mehr von der Rolle abwickeln lässt. Eine starke Seitenkantenklebrigkeit kann auch den Transport und die Lagerung der Klebebandrolle behindern, wenn die Rolle auf der Seitenfläche liegend ohne eine antiadhäsive Zwischenlegscheibe transportiert oder gelagert wird.

Ein überstehender Liner löst die geschilderten Nachteile. Er verhindert einen Kontakt zwischen zwei benachbarten Klebeschichten und sorgt für einen räumlichen Abstand zwischen Kleberollenseite und Untergrund. Auch die Zwischenlegscheibe wird somit überflüssig.

Einseitig klebrige Klebebänder bestehen üblicherweise aus einem Trägermaterial, auf das einseitig eine Klebemasse aufgebracht ist. Die freie Seite der Klebemasse kann dann zusätzlich mit einem Liner eingedeckt sein.

Doppelseitig klebrige Klebebänder, auch beidseitig klebrige genannt, weisen zumeist einen Träger auf, der auf beiden Seiten mit einer Klebemassenbeschichtung ausgerüstet ist. Die beiden Klebemassen können identisch sein, sie können aber auch unterschiedlich ausgeführt werden. Zumindest eine der beiden Klebemassenschichten ist mit einem Liner eingedeckt, um in der Klebebandrolle einen direkten Kontakt zwischen den beiden Klebemassenschichten zu verhindern. Daneben kann auch die zweite Klebemasse mit einem zweiten Liner eingedeckt sein.

Doppelseitig klebrige Klebebänder müssen nicht zwingend einen Träger haben. Auch eine reine Klebemassenschicht oder zwei oder mehr aufeinander laminierte Klebemassenschichtern werden als doppelseitig klebrige Klebebänder bezeichnet.

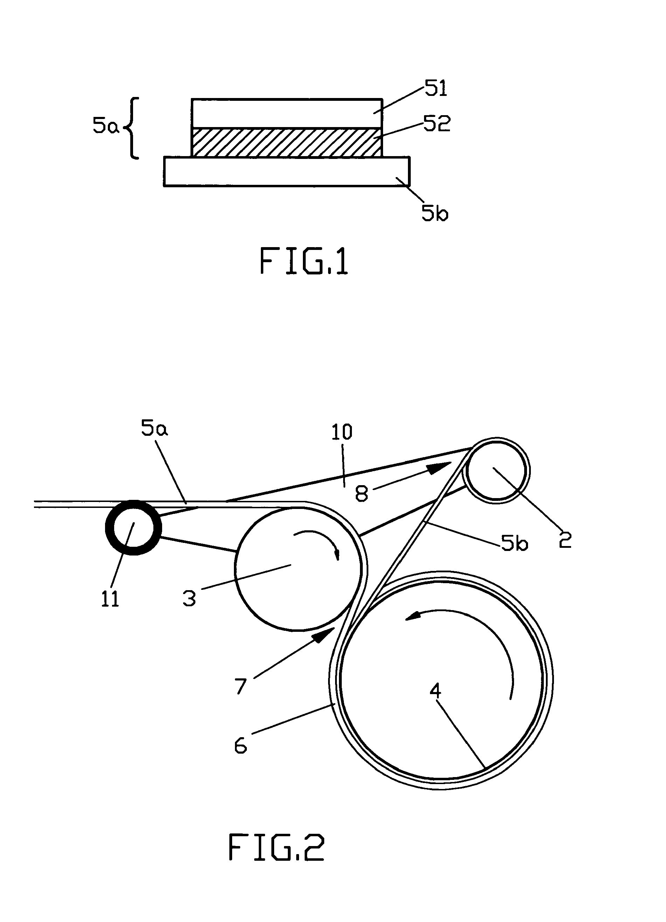

In der Figur 1 ist ein doppelseitig klebendes Klebeband 5a dargestellt, wobei das Klebeband 5a aus einer reinen Klebemassenschicht 52 besteht. Die untere Seite der Klebemassenschicht ist mit einem ersten Liner 5b eingedeckt, der beide Kanten der Klebemasse 52 überragt. Die obere Seite der Klebemasse 52 ist mit einem zweiten Liner 51 ausgerüstet, dessen Breite identisch ist mit der Breite der Klebemasse 52. Oberer Liner 51 und klebemassenschicht 52 bilden das Klebeband 5a.

Ein Nachteil von Klebebändern mit überstehendem Liner ist die aufwändige Fertigung.

Klebebänder werden hergestellt, indem üblicherweise eine breite Rolle Trägermaterial abgerollt wird und anschließend mit einer Klebemasse ausgerüstet wird. Diese Klebemasse kann anschließend mit einem Liner eingedeckt werden. Nach eventuellen weiteren Verarbeitungsschritten wie zum Beispiel Trocknen wird das mit Klebemasse ausgerüstete Trägermaterial, Klebebandbahn genannt, samt Liner zu einer so genannten Mutterrolle aufgewickelt. Zum Schneiden wird die Mutterrolle abgewickelt und die mit einem Liner eingedeckte Klebebandbahn einer entsprechenden Schneidvorrichtung zugeführt, in der die Klebebandbahn in einzelne Klebebänder aufgeschnitten wird, die dann üblicherweise auf Kerne aus beispielsweise Pappe oder Kunststoff gewickelt werden. Das Schneiden kann auch direkt nach der Fertigung erfolgen, also ohne dass die Klebebandbahn samt Liner auf- und wieder abgewickelt wird.

Daneben werden Klebebänder dadurch hergestellt, dass aus einer Jumbo- oder Mutterrolle direkt Klebebandrollen abgestochen werden.

Weiterhin ist es möglich, dass die Klebebandbahn ohne Liner geschnitten wird und der Liner nach dem Schnittvorgang in der entsprechenden Breite auf die offene Klebemassenseite aufgebracht wird.

Wenn das Klebeband aus einer reinen Klebemassenschicht (ein so genanntes Transferklebeband) besteht, also trägerfrei ist, wird diese üblicherweise direkt auf einen Liner aufgebracht. In diesem Fall wird die nichtgeschnittene Klebemassenschicht als Klebebandbahn bezeichnet.

Beim Schneiden der mit einem Liner ausgerüsteten Klebebandbahn kann im Kantenbereich jedes einzelnen Klebebands ein zusätzlicher schmaler Streifen abgetrennt werden, ohne dass der darunter befindliche Liner an dieser Stelle durchtrennt wird. Der schmale Streifen wird dann vor dem Aufrollen des Klebebands entfernt, so dass ein klebemassefreier Bereich an einem Rand des Klebebands erzeugt wird. Das Schneiden und Entfernen von schmalen Streifen ist auch an beiden Kanten des Klebebands möglich, so dass der Liner an beiden Rändern des Klebebands übersteht. Dieses Verfahren hat den Nachteil, dass das Klebeband schmaler wird und damit ein Materialverlust verbunden ist.

Die Fertigung der eingedeckten Klebebänder erfolgt, indem Klebeband und Liner einer Kaschierstation zugeführt werden, in der der Liner auf die offene Klebemassenseite aufgebracht wird und anschließend das eingedeckte Klebeband, zumeist über weitere Umlenkungen einer Aufwickelstation zugeführt wird.

Die Kaschierstation kann ein aus zwei Walzen gebildeter Walzenspalt sein, die Aufwickelstation eine weitere Walze, die den Kern trägt, auf den das eingedeckte Klebeband aufgewickelt wird.

Durch die langen Wege des Klebebands, des Liners und des späteren eingedeckten Klebebands durch mehrere Stationen und über mehrere Umlenkungen ist es sehr schwierig, die Bahnspannung insbesondere beim Wickelpunkt auf dem gewünschten Wert konstant zu halten.

Bei nicht optimaler Wickelspannung entstehen Falten und Verspannungen im kaschierten Material, die beispielsweise zu einem Telekopieren der fertigen Rolle führen können.

Besonders problematisch ist die Wicklung kreuzgewickelter Rollen mit großen Lauflängen, so genannte SAF-Rollen. Typische Lauflängen beginnen ab 2.500 Meter und gehen bis 50.000 Meter.

Aufgabe der Erfindung ist es, die Nachteile nach dem Stand der Technik zu beseitigen. Es soll insbesondere ein Verfahren zur Herstellung eines Klebebands mit überstehendem Liner angegeben werden, das verfahrenstechnisch einfach gestaltet ist, das so gefahren werden kann, dass es zu keinen Verlusten an Klebeband führt und das Schwankungen in der Wickelspannung während des Wickelvorgangs weitgehend vermeidet und das die Kreuzwicklung des Klebebands zu einer Langrolle ermöglicht.

Gelöst wird diese Aufgabe durch Verfahren, wie sie in den beiden Hauptansprüchen niedergelegt sind. Vorteilhafte Ausführungsformen des Verfahrens sind Gegenstand der Unteransprüche.

Demgemäß betrifft die Erfindung Verfahren zur Herstellung einer kreuzgewickelten Langrolle eines zumindest einseitig klebenden Klebebands, bei dem die zumindest eine klebende Seite mit einem Liner eingedeckt ist, in Form einer archimedischen Spirale, wobei sich diese nur dadurch unterscheiden, dass Klebeband und Liner unterschiedlich geführt werden.

Gemäß einer ersten Ausführungsform umfasst die Erfindung ein Verfahren zur Herstellung einer kreuzgewickelten Langrolle eines zumindest einseitig klebenden Klebebands, bei dem die zumindest eine klebende Seite mit einem Liner eingedeckt ist, in Form einer archimedischen Spirale, wobei
- ein Kern auf einer Achse lösbar fixiert ist, auf den das mit dem Liner eingedeckte Klebeband gewickelt wird,
- eine Andruckrolle mit der Mantelfläche des Kerns oder mit dem mit dem Liner eingedeckten Klebeband, das bereits auf dem Kern aufgewickelt ist, derart in Berührung steht, dass sich zwischen Andruckrolle und Mantelfläche des Kerns oder mit dem mit Liner eingedeckten Klebeband ein Walzenspalt ergibt, wobei Kern und Andruckrolle gegenläufig rotieren,
- der Liner von einer Liner rolle abgewickelt wird,
- der Liner auf die zumindest eine offene Klebemasseseite des Klebebands, das auf der Andruckrolle liegend in Richtung Walzenspalt geführt wird, aufgelegt wird und auf der Andruckrolle liegend das Laminat aus Klebeband und Liner in den Walzenspalt geführt werden,
- das mit dem Liner eingedeckte Klebeband auf dem Kern aufgewickelt wird,
- wobei die Linerrolle des Liners sowie die Andruckrolle synchron in einer Bewegung parallel zur Achse der Langrolle hin- und herbewegt werden,
- wobei der Liner eine größere Breite als das Klebeband (jeweils bezogen auf die Querrichtung von Liner und Klebeband) aufweist und so auf das Klebeband laminiert wird, dass er an beiden Kanten des Klebebands übersteht.

Gemäß einer zweiten Ausführungsform umfasst die Erfindung ein Verfahren zur Herstellung einer kreuzgewickelten Langrolle eines zumindest einseitig klebenden Klebebands, bei dem die zumindest eine klebende Seite mit einem Liner eingedeckt ist, in Form einer archimedischen Spirale, wobei
- ein Kern auf einer Achse lösbar fixiert ist, auf den das mit dem Liner eingedeckte Klebeband gewickelt wird,
- eine Andruckrolle mit der Mantelfläche des Kerns oder mit dem mit dem Liner eingedeckten Klebeband, das bereits auf dem Kern aufgewickelt ist, derart in Berührung steht, dass sich zwischen Andruckrolle und Mantelfläche des Kerns oder mit dem mit Liner eingedeckten Klebeband ein Walzenspalt ergibt, wobei Kern und Andruckrolle gegenläufig rotieren,
- das Klebeband, vorzugsweise auf die Andruckrolle liegend, Richtung Walzenspalt geführt wird,
   der Liner von einer Liner rolle abgewickelt wird,
- das Klebeband und der Liner gleichzeitig und von der gleichen Seite in den Walzenspalt geführt werden,
- der Liner in diesem Walzenspalt auf die zumindest eine offene Klebemasseseite kaschiert wird,
- das mit dem Liner eingedeckte Klebeband auf dem Kern aufgewickelt wird,
- wobei die Linerrolle des Liners sowie die Andruckrolle synchron in einer Bewegung parallel zur Achse der Langrolle hin- und herbewegt werden,
- wobei der Liner eine größere Breite als das Klebeband (jeweils bezogen auf die Querrichtung von Liner und Klebeband) aufweist und so auf das Klebeband laminiert wird, dass er an beiden Kanten des Klebebands übersteht.

Vorteilhafterweise wird die Achse mit dem Kern angetrieben, so dass die Andruckrolle durch Kraftschluss gegenläufig zum Kern rotiert.

Weiter vorzugsweise ist die Andruckrolle schwenkbar gelagert, so dass sich die Position der Andruckrolle dem wachsenden Durchmesser der Rolle mit eingedecktem Klebeband anpassen kann. Vorzugsweise wird die Andruckrolle mechanisch angedrückt, ganz besonders bevorzugt über eine Pneumatik.

Vorteilhaft kann es sein, wenn die Andruckrolle eine antiadhäsive Oberfläche aufweist, beispielsweise aus Teflon.

Weiter vorzugsweise befindet sich der Liner auf einer Linerrolle, wird von dieser abgewickelt und dabei Richtung Walzenspalt geführt, wobei der Punkt, an dem der Liner die Linerrolle verlässt, höchstens 50 cm von dem Walzenspalt entfernt ist und/oder zwischen Linerrolle und Walzenspalt der Liner über keine Umlenkrolle geführt wird. Bevorzugt sind beide Möglichkeiten gleichzeitig verwirklicht.

Aufgrund dieses kurzen Abstands kann die Bahnspannung in dem Liner bis zum Walzenspalt sehr konstant gehalten werden.

Weiter vorzugsweise ist die Linerrolle beweglich gelagert, beispielsweise schwenkbar, so dass der Punkt, an dem der Liner die Linerrolle verlässt, stets einen konstanten Abstand von dem Walzenspalt aufweist.

Sodann kann in der Linerrolle, die bevorzugt nicht angetrieben wird, eine Federbremse vorahnden sein, so dass die Spannung im Liner während des Abwickelvorgangs möglichst konstant gehalten werden kann.

Um das Klebeband an einer vorgegebenen Position von der Abwickelrolle kommend in das Verfahren zu spenden, wird das Klebeband über eine Führungshülse der Andruckrolle zugeführt.

Die Führungshülse kann - mathematisch ausgedrückt - die Form eines einschaligen Rotationshyperboloids annehmen. Des Weiteren kann die Führungshülse die Form einer Rohrhülse mit überstehenden Planflächen an den Hülsenenden aufweisen. Vorzugsweise ist die Führungshülse antiadhäsiv ausgerüstet.

Vorzugsweise wird die Führungshülse synchron mit der Linerrolle sowie der Andruckrolle in einer Bewegung parallel zur Achse der Langrolle hin- und herbewegt wird.

Weiter vorzugsweise gegebenenfalls sind Führungshülse, Linerrolle sowie Andruckrolle auf einem Arm befestigt, der mitsamt gegebenenfalls Führungshülse, Linerrolle sowie Andruckrolle die axiale Bewegung vollführt.

Das Klebeband kann eine reine Klebemassenschicht (die ihrerseits aus einer, zwei oder mehreren Klebemassenschichten bestehen kann), ein mit einer Klebemasse einseitig ausgerüstetes Trägermaterial oder ein beidseitig mit einer Klebemasse ausgerüstetes Trägermaterial sein, wobei bei Letzterem die zweite Klebemasse zusätzlich mit einem weiteren Liner eingedeckt sein kann.

Als bandförmiges Trägermaterial können beispielweise Vliese, Papiere, orientierte PP-, HDPE-, LDPE-, PVC- und PET-Folien sowie Schäume (zum Beispiel PE-Schäume oder PVA-Schäume) und Gewebe verwendet werden, wobei diese Aufzählung nicht abschließend ist.

Als Liner werden vorzugsweise einseitig oder beidseitig antihaftbeschichtete Trägermaterialien wie beispielsweise Papier, insbesondere beschichtetes Papier wie PE-Papier, orientierte PP-, HDPE-, LDPE-, PVC-, MOPP-, BOPP-, PEN-, PMP-, PA-und/oder PET-Folien eingesetzt. Besonders bevorzugt sind silikonbeschichtete Liner sowie Liner, die silikonfreie Trennschichten wie zum Beispiel Paraffin, Teflon oder Wachse aufweisen. Auch sind Verbundmaterialien wie beispielsweise PET/Aluminium-Folie als Liner verwendbar.

Als Klebemasse können alle bekannten Klebemassen wie Klebemassen auf Basis von lösemittelhaltigen Naturkautschuk- und Acrylatklebemassen oder lösungsmittelfreie Klebemassen verwendet werden.

Unter dem Begriff "Schneiden" werden auch Stanzverfahren subsummiert. Die Begriffe "Laminieren" und "Kaschieren" werden synonym verwendet, sofern nicht anderes angegeben. Die Begriffe "Delaminieren" und "Dekaschieren" werden synonym verwendet, sofern nicht anderes angegeben ist.

Vorzugsweise wird das Verfahren kontinuierlich durchgeführt.

Erfindungsgemäß weist der Liner eine größere Breite als das Klebeband (jeweils bezogen auf die Querrichtung von Liner und Klebeband) auf und wird so auf das Klebeband laminiert, dass er an beiden Kanten des Klebebands übersteht.

Die Breite des Klebebands kann zwischen 5 bis 50 mm, vorzugsweise 10 bis 19 mm betragen. Bevorzugt werden Klebebänder mit 6 bis 12 mm Breite gefertigt.

Der Liner steht vorteilhaft jeweils 2 mm an beiden Seitenkanten des Klebebands über. Selbstverständlich können auch andere Überstände gewählt werden.

Anhand der im Folgenden ausführlicher beschriebenen Figuren werden vorteilhafte Ausführungsformen des Verfahrens dargestellt, ohne dass diese oder die Figuren selbst als einschränkend zu verstehen sind.

In der Figur 2 ist ein mögliches Verfahren zur Herstellung einer Langrolle 6 eines zumindest einseitig klebenden Klebebands 5a, bei dem die zumindest eine klebende Seite mit einem Liner 5b eingedeckt ist, dargestellt.

Hierzu ist ein Kern 4 aus Kunststoff oder Pappe auf einer (nicht gezeigten) Achse, die angetrieben wird, lösbar fixiert, auf den das mit dem Liner 5b eingedeckte Klebeband 5a gewickelt wird.

Das Klebeband 5a wird von einer Rolle verspendet, gleichzeitig der Liner 5b von einer Linerrolle 2.

Das Klebeband 5a wird über eine Führungshülse 11 in Richtung Andruckrolle 3 geführt. Der Liner 5b wird ebenfalls in Richtung Andruckrolle 3 geführt, wobei der Liner 5b derart auf die zumindest eine offene Klebemasseseite des Klebebands 5a aufgelegt wird, dass sich der Liner 5b zwischen Klebeband 5a und Andruckrolle 3 befindet.

Das aus Klebeband 5a und Liner 5b entstehende Laminat wird auf der Andruckrolle 3 liegend in den Walzenspalt 7 geführt, der sich zwischen Andruckrolle 3 und Mantelfläche des Kerns 4 oder - nachdem erste Lagen des eingedeckten Klebebands 5a auf dem Kern 4 gewickelt sind - mit dem mit Liner 5b eingedeckten und auf dem Kern 4 bereits befindlichen Klebeband 5a ergibt. Wie gezeigt, rotieren Kern 4 und Andruckrolle 3 gegenläufig. Klebeband 5a und Liner 5b werden also gleichzeitig und von der gleichen Seite in den Walzenspalt 7 geführt.

Die Linerrolle 2 des Liners 5b sowie die Andruckrolle 3 werden synchron in einer Bewegung, vorzugsweise mit einer konstanten Geschwindigkeit parallel zur Achse der Langrolle 6 hin- und herbewegt.

Der Liner 5b wird in diesem Walzenspalt 7 auf die offene Klebemasseseite des Klebebands 5a kaschiert. Schließlich wird das mit dem Liner 5b eingedeckte Klebeband 5a auf dem Kern 4 aufgewickelt, woraus eine kreuzgewickelte Langrolle 6 resultiert.

Um diese Bewegung besonders synchron ablaufen zu lassen, sind Führungshülse 11, Linerrolle 2 und Andruckrolle 3 auf einem Hebel 10 befestigt, der die axiale Bewegung mitsamt der Führungshülse 11, der Linerrolle 2 und der Andruckrolle 3 durchführt.

Es sei nochmals erwähnt, dass der Liner 5b eine größere Breite als das Klebeband 5a (jeweils bezogen auf die Querrichtung von Liner 5a und Klebeband 5b) auf und so auf das Klebeband 5a laminiert wird, dass er an beiden Kanten des Klebebands 5a übersteht.

Der Punkt 8, an dem der Liner 5b die Linerrolle 2 verlässt, ist höchstens 50 cm von dem Walzenspalt 7 entfernt, des Weiteren befindet sich keine weitere Umlenkrolle zwischen Linerrolle 2 und Walzenspalt 7, so dass eine Verspannung des Liners 5b nicht auftreten kann und insbesondere auch Verspannungen in der Langrolle 6 weitgehend vermieden werden, was die Wickelqualität der Langrolle 6 deutlich erhöht.

Auch das Klebeband 5a wird nicht über eine weitere Umlenkrolle geführt, sondern über die bevorzugt vorgesehene Führungshülse 11 von der Rolle direkt zur Andruckrolle 3 geführt.

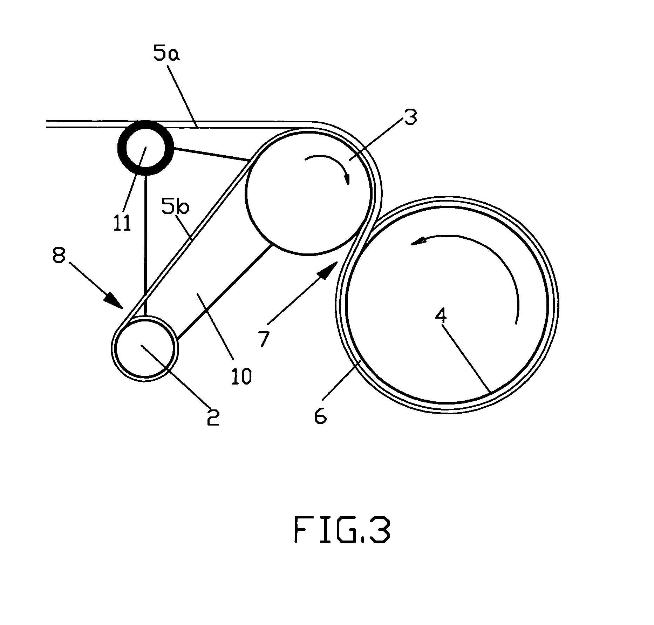

Die Figur 3 zeigt eine Variante der erfindungsgemäßen Verfahren. Im Unterschied zu dem vorherigen Verfahren werden das Klebeband 5a und der Liner 5b gleichzeitig und von der gleichen Seite in den Walzenspalt 7 geführt, und zwar dergestalt, dass auf der Langrolle 6 der Liner 5b unterhalb der Klebemasse 5a legt (der radiale Abstand des Liners 5b zur Achse der Langrolle 6 ist größer als der der zugehörigen Klebebandlage 5a).

Das Klebeband 5a wird über eine Führungshülse 11 zur Andruckrolle geführt und umschiegt diese über einen Winkel von ungefähr 135°. Auf der Andruckrolle 3 liegend erfolgt der Weitertransport in Richtung Walzenspalt 7 geführt wird.

Der Liner 5b wird von einer Linerrolle 2 kommend direkt in den Walzenspalt 7 geführt, wo er auf die zumindest eine offene Klebemasseseite des Klebebands 5a kaschiert wird. Das mit dem Liner 5b eingedeckte Klebeband 5a wird auf dem Kern 4 aufgewickelt. Wiederum befinden sich die Linerrolle 2, die Andruckrolle 3 und die Führungshülse 11 auf einem Hebel 10 und werden synchron in einer Bewegung, vorzugsweise mit einer konstanten Geschwindigkeit parallel zur Achse der Langrolle 6 hin- und herbewegt, woraus eine kreuzgewickelte Rolle 6 resultiert.

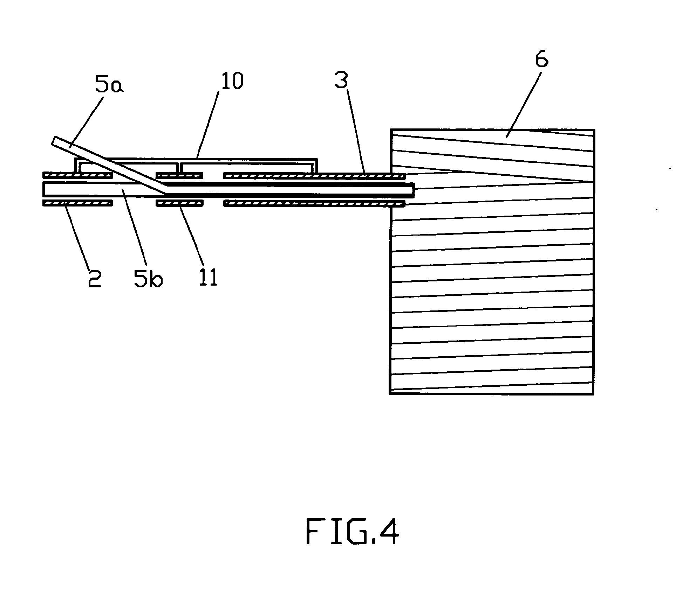

In der Figur 4 ist das Verfahren nach Figur 2 gezeigt, wie es sich darstellt, wenn die Sicht von oben auf die einzelnen Anlagenteile ist.

Das Klebeband 5a wird abgewickelt und über die Führungshülse 11 der Andruckrolle 3 zugeführt. Der Liner 2 wird von der Linerrolle 2 abgewickelt und ebenfalls der Andruckrolle 3 zugeführt.

Auf der Andruckrolle 3 wird der Liner 5b von unten auf die zumindest eine offene Klebemasseseite des Klebebands 5a aufgelegt, so dass sich der Liner 5b zwischen Klebeband 5a und Andruckrolle 3 befindet.

Das aus Klebeband 5a und Liner 5b entstehende Laminat wird auf der Andruckrolle 3 liegend in den Walzenspalt 7 geführt, der sich zwischen Andruckrolle 3 und zwischen den ersten Lagen mit dem mit Liner 5b eingedeckten und auf dem Kern 4 bereits befindlichen Klebeband 5a ergibt.

Führungshülse 11, Linerrolle 2 und Andruckrolle 3 sind auf einem Hebel 10 befestigt, der die axiale Bewegung mitsamt der Führungshülse 11, der Linerrolle 2 und der Andruckrolle 3 in Bezug auf den Kern in axialer Richtung, also der angezeigten Pfeilrichtung, durchführt.

Durch die Hin- und Herbewegung mit einer bevorzugt kontanten Geschwindigkeit (angedeutet durch den Pfeil) entsteht nicht wie üblich eine Klebebandrolle in Form einer archimedischen Spirale, bei der alle Lagen des Klebebands exakt übereinander aufgelegt werden, sondern eine kreuzgewickelte Klebebandrolle in Form einer archimedischen Spirale, sprich die einzelnen Lagen des Klebebands werden schräg auf die Rolle gelegt (weisen also nicht wie üblich einen rechten Winkel zur Achse der Rolle auf).

In der Figur 4 bewegt sich der Hebelarm 10 aktuell in Richtung der geschlossenen Pfeilspitze.

Der Liner 5b hat eine größere Breite als das Klebeband 5a (jeweils bezogen auf die Querrichtung von Liner 5a und Klebeband 5b) und wird so auf das Klebeband 5a laminiert, dass er an beiden Kanten des Klebebands 5a übersteht.

Ein großer Vorteil des erfindungsgemäßen Verfahrens ist, dass das Verfahren ohne jeglichen Verlust von Klebebandabschnitten gefahren werden kann.

Dennoch liegt es im Rahmen der Erfindung, wenn dieser Vorteil nicht genutzt wird und beispielsweise zusätzlich ein schmaler Streifen aus den Klebebändern abgetrennt wird, der vor dem Aufrollen des Klebebands entfernt wird.

## Patentansprüche

1. Verfahren zur Herstellung einer kreuzgewickelten Langrolle eines zumindest einseitig klebenden Klebebands, bei dem die zumindest eine klebende Seite mit einem Liner eingedeckt ist, in Form einer archimedischen Spirale, wobei
ein Kern auf einer Achse lösbar fixiert ist, auf den das mit dem Liner eingedeckte Klebeband gewickelt wird,
eine Andruckrolle mit der Mantelfläche des Kerns oder mit dem mit dem Liner eingedeckten Klebeband, das bereits auf dem Kern aufgewickelt ist, derart in Berührung steht, dass sich zwischen Andruckrolle und Mantelfläche des Kerns oder mit dem mit Liner eingedeckten Klebeband ein Walzenspalt ergibt, wobei Kern und Andruckrolle gegenläufig rotieren,
der Liner von einer Linerrolle abgewickelt wird,
der Liner auf die zumindest eine offene Klebemasseseite des Klebebands, das auf der Andruckrolle liegend in Richtung Walzenspalt geführt wird, aufgelegt wird und auf der Andruckrolle liegend das Laminat aus Klebeband und Liner in den Walzenspalt geführt werden,
das mit dem Liner eingedeckte Klebeband auf dem Kern aufgewickelt wird,
wobei die Linerrolle des Liners sowie die Andruckrolle synchron in einer Bewegung parallel zur Achse der Langrolle hin- und herbewegt werden,
wobei der Liner eine größere Breite als das Klebeband (jeweils bezogen auf die Querrichtung von Liner und Klebeband) aufweist und so auf das Klebeband laminiert wird, dass er an beiden Kanten des Klebebands übersteht.

2. Verfahren zur Herstellung einer kreuzgewickelten Langrolle eines zumindest einseitig klebenden Klebebands, bei dem die zumindest eine klebende Seite mit einem Liner eingedeckt ist, in Form einer archimedischen Spirale, wobei
ein Kern auf einer Achse lösbar fixiert ist, auf den das mit dem Liner eingedeckte Klebeband gewickelt wird,
eine Andruckrolle mit der Mantelfläche des Kerns oder mit dem mit dem Liner eingedeckten Klebeband, das bereits auf dem Kern aufgewickelt ist, derart in Berührung steht, dass sich zwischen Andruckrolle und Mantelfläche des Kerns oder mit dem mit Liner eingedeckten Klebeband ein Walzenspalt ergibt, wobei Kern und Andruckrolle gegenläufig rotieren,
das Klebeband, vorzugsweise auf die Andruckrolle liegend, Richtung Walzenspalt geführt wird,
der Liner von einer Linerrolle abgewickelt wird,
das Klebeband und der Liner gleichzeitig und von der gleichen Seite in den Walzenspalt geführt werden,
der Liner in diesem Walzenspalt auf die zumindest eine offene Klebemasseseite kaschiert wird,
das mit dem Liner eingedeckte Klebeband auf dem Kern aufgewickelt wird, wobei die Linerrolle des Liners sowie die Andruckrolle synchron in einer Bewegung parallel zur Achse der Langrolle hin- und herbewegt werden,
wobei der Liner eine größere Breite als das Klebeband (jeweils bezogen auf die Querrichtung von Liner und Klebeband) aufweist und so auf das Klebeband laminiert wird, dass er an beiden Kanten des Klebebands übersteht.

3. Verfahren nach Anspruch 1 oder 2,
**dadurch gekennzeichnet, dass**
die Achse mit dem Kern angetrieben wird, so dass die Andruckrolle durch Kraftschluss gegenläufig zum Kern rotiert.

4. Verfahren nach mindestens einem der Ansprüche 1 bis 3,
**dadurch gekennzeichnet, dass**
die Andruckrolle schwenkbar gelagert ist, so dass sich die Position der Andruckrolle dem wachsenden Durchmesser der Rolle mit eingedecktem Klebeband anpassen kann.

5. Verfahren nach mindestens einem der vorherigen Ansprüche,
**dadurch gekennzeichnet, dass**
sich der Liner auf einer Linerrolle befindet, von dieser abgewickelt und dabei Richtung Walzenspalt geführt wird, wobei der Punkt, an dem der Liner die Linerrolle verlässt, höchstens 50 cm von dem Walzenspalt entfernt ist und/oder zwischen Linerrolle und Walzenspalt der Liner über keine Umlenkrolle geführt wird.

6. Verfahren nach Anspruch 5,
**dadurch gekennzeichnet, dass**
die Linerrolle beweglich gelagert ist, so dass der Punkt, an dem der Liner die Linerrolle verlässt, stets einen konstanten Abstand von dem Walzenspalt aufweist.

7. Verfahren nach mindestens einem der vorherigen Ansprüche,
**dadurch gekennzeichnet, dass**
das Klebeband über eine Führungshülse der Andruckrolle zugeführt wird.

8. Verfahren nach Anspruch 7,
**dadurch gekennzeichnet, dass**
die Führungshülse synchron mit der Linerrolle sowie der Andruckrolle in einer Bewegung parallel zur Achse der Langrolle hin- und herbewegt wird.

9. Verfahren nach mindestens einem der vorherigen Ansprüche,
**dadurch gekennzeichnet, dass**
gegebenenfalls Führungshülse, Linerrolle sowie Andruckrolle auf einem Arm befestigt sind, der mitsamt gegebenenfalls Führungshülse, Linerrolle sowie Andruckrolle die axiale Bewegung vollführt.

10. Verfahren nach mindestens einem der vorherigen Ansprüche,
**dadurch gekennzeichnet, dass**
das Klebeband eine reine Klebemassenschicht (die ihrerseits aus einer, zwei oder mehreren Klebemassenschichten bestehen kann), ein mit einer Klebemasse einseitig ausgerüstetes Trägermaterial oder ein beidseitig mit einer Klebemasse ausgerüstetes Trägermaterial ist.

11. Verfahren nach mindestens einem der vorherigen Ansprüche,
**dadurch gekennzeichnet, dass**
das Verfahren kontinuierlich durchgeführt wird.

## Claims

1. Process for the production of a crosswound long roll of an at least single-side-adhesive adhesive tape in which the at least one adhesive side has been covered with a liner, in the form of an Archimedean spiral, where
a core has been releasably fixed on an axle, and the adhesive tape covered with the liner is wound on to this core,
a pressure roll is in contact with the curved surface of the core or with the adhesive tape which has been covered with the liner and which has already been wound on the core, in such a way as to give a nip between pressure roll and curved surface of the core or adhesive tape covered with the liner, where core and pressure roll rotate in opposite directions,
the liner is unwound from a liner roll,
the liner is placed on to the at least one open adhesive side of the adhesive tape which is guided on the pressure roll in the direction of the nip, and the laminate made of adhesive tape and liner is guided on the pressure roll into the nip,
the adhesive tape covered with the liner is wound up on the core,
where the liner roll of the liner and the pressure roll are moved to and fro synchronously in a movement parallel to the axis of the long roll,
where the liner is wider than the adhesive tape (based in each case on the transverse direction of liner and adhesive tape), and is laminated on to the adhesive tape in such a way that it protrudes at both edges of the adhesive tape.

2. Process for the production of a crosswound long roll of an at least single-side-adhesive adhesive tape in which the at least one adhesive side has been covered with a liner, in the form of an Archimedean spiral, where
a core has been releasably fixed on an axle, and the adhesive tape covered with the liner is wound on to this core,
a pressure roll is in contact with the curved surface of the core or with the adhesive tape which has been covered with the liner and which has already been wound on the core, in such a way as to give a nip between pressure roll and curved surface of the core or adhesive tape covered with the liner, where core and pressure roll rotate in opposite directions,
the adhesive tape, preferably on the pressure roll, is guided in the direction of the nip,
the liner is unwound from a liner roll,
the adhesive tape and the liner are guided at the same time and from the same side into the nip,
in said nip, the liner is laminated on to the at least one open adhesive side,
the adhesive tape covered with the liner is wound up on the core,
where the liner roll of the liner and the pressure roll are moved to and fro synchronously in a movement parallel to the axis of the long roll,
where the liner is wider than the adhesive tape (based in each case on the transverse direction of liner and adhesive tape), and is laminated on to the adhesive tape in such a way that it protrudes at both edges of the adhesive tape.

3. Process according to Claim 1 or 2,
**characterized in that**
the axle with the core is driven in such a way that friction causes the pressure roll to rotate in a direction opposite to that of the core.

4. Process according to at least one of Claims 1 to 3,
**characterized in that**
the pressure roll has been mounted pivotably, and the position of the pressure roll can therefore adapt to the increasing diameter of the roll with covered adhesive tape.

5. Process according to at least one of the preceding claims,
**characterized in that**
the liner is located on a liner roll, and is unwound therefrom, and thereby is guided in the direction of the nip, where the point at which the liner leaves the liner roll is at most 50 cm distant from the nip, and/or between liner roll and nip the liner is not guided by way of any deflector roll.

6. Process according to Claim 5,
**characterized in that**
the liner roll has been mounted movably, and the point at which the liner leaves the liner roll is therefore always at a constant distance from the nip.

7. Process according to at least one of the preceding claims,
**characterized in that**
the adhesive tape is fed to the pressure roll by way of a guide sleeve.

8. Process according to Claim 7,
**characterized in that**
the guide sleeve is moved to and fro synchronously with the liner roll and with the pressure roll in a movement parallel to the axis of the long roll.

9. Process according to at least one of the preceding claims,
**characterized in that**
optionally guide sleeve, liner roll, and pressure roll have been secured on an arm which moves axially together with optionally guide sleeve, liner roll, and pressure roll.

10. Process according to at least one of the preceding claims,
**characterized in that**
the adhesive tape is a simple adhesive layer (which in turn can be composed of one, two, or more adhesive layers), is a backing material equipped with an adhesive on one side, or is a backing material equipped with an adhesive on both sides.

11. Process according to at least one of the preceding claims,
**characterized in that**
the process is carried out continuously.

## Revendications

1. Procédé pour la fabrication d'un rouleau de grande longueur en enroulement croisé d'une bande adhésive au moins monoface, dans lequel ladite au moins une face adhésive est recouverte d'un revêtement, sous forme d'une spirale d'Archimède, un noyau, sur lequel la bande adhésive revêtue du revêtement est enroulée, étant fixé de manière amovible sur un axe, un rouleau de pression étant en contact avec la surface enveloppante du noyau ou avec la bande adhésive recouverte du revêtement qui est déjà enroulée sur le noyau de manière telle qu'on obtient, entre le rouleau de pression et la surface enveloppante du noyau ou la bande adhésive revêtue du revêtement, une fente de laminage, le noyau et le rouleau de pression tournant de manière opposée ; le revêtement est déroulé à partir d'un rouleau de revêtement ; le revêtement est appliqué sur ladite au moins une face présentant une masse adhésive ouverte de la bande adhésive qui, se trouvant sur le rouleau de pression, est guidée en direction de la fente de laminage et le stratifié composé de la bande adhésive et du revêtement, se trouvant sur le rouleau de pression, est guidé dans la fente de laminage ; la bande adhésive recouverte du revêtement est enroulée sur le noyau,
le rouleau de revêtement ainsi que le rouleau de pression étant animés d'un mouvement de va-et-vient synchrone parallèle à l'axe du rouleau de grande longueur,
le revêtement présentant une largeur supérieure à celle de la bande adhésive (à chaque fois par rapport à la direction transversale du revêtement et de la bande adhésive) et étant stratifié sur la bande adhésive de manière telle qu'il dépasse des deux côtés de la bande adhésive.

2. Procédé pour la fabrication d'un rouleau de grande longueur en enroulement croisé d'une bande adhésive au moins monoface, dans lequel ladite au moins une face adhésive est recouverte d'un revêtement, sous forme d'une spirale d'Archimède, un noyau, sur lequel la bande adhésive revêtue du revêtement est enroulée, étant fixé de manière amovible sur un axe, un rouleau de pression étant en contact avec la surface enveloppante du noyau ou avec la bande adhésive recouverte du revêtement qui est déjà enroulée sur le noyau de manière telle qu'on obtient, entre le rouleau de pression et la surface enveloppante du noyau ou la bande adhésive revêtue du revêtement, une fente de laminage, le noyau et le rouleau de pression tournant de manière opposée ; la bande adhésive, se trouvant de préférence sur le rouleau de pression, est guidée en direction de la fente de laminage ; le revêtement est déroulé à partir d'un rouleau de revêtement ; la bande adhésive et le revêtement sont guidés simultanément et à partir du même côté dans la fente de laminage ; le revêtement est collé dans cette fente de laminage sur ladite au moins une face présentant une masse adhésive ouverte ; la bande adhésive recouverte du revêtement est enroulée sur le noyau,
le rouleau de revêtement ainsi que le rouleau de pression étant animés d'un mouvement de va-et-vient synchrone parallèle à l'axe du rouleau de grande longueur,
le revêtement présentant une largeur supérieure à celle de la bande adhésive (à chaque fois par rapport à la direction transversale du revêtement et de la bande adhésive) et étant stratifié sur la bande adhésive de manière telle qu'il dépasse des deux côtés de la bande adhésive.

3. Procédé selon la revendication 1 ou 2, **caractérisé en ce que** l'axe présentant le noyau est entraîné de manière telle que le rouleau de pression tourne par adhérence de manière opposée au noyau.

4. Procédé selon au moins l'une quelconque des revendications 1 à 3, **caractérisé en ce que** le rouleau de pression est logé de manière pivotante de manière telle que la position du rouleau de pression peut s'adapter au diamètre croissant du rouleau présentant la bande adhésive revêtue.

5. Procédé selon au moins l'une quelconque des revendications précédentes, **caractérisé en ce que** le revêtement se trouve sur un rouleau de revêtement, est déroulé de celui-ci et guidé en direction de la fente de laminage, le point où le revêtement quitte le rouleau de revêtement étant éloigné au plus de 50 cm de la fente de laminage et/ou le revêtement n'étant guidé sur aucun rouleau de déviation entre le rouleau de revêtement et la fente de laminage.

6. Procédé selon la revendication 5, **caractérisé en ce que** le rouleau de revêtement est logé de manière mobile de manière telle que le point où le revêtement quitte le rouleau de revêtement présente toujours une distance constante de la fente de laminage.

7. Procédé selon au moins l'une quelconque des revendications précédentes, **caractérisé en ce que** la bande adhésive est acheminée vers le rouleau de pression via un tube de guidage.

8. Procédé selon la revendication 7, **caractérisé en ce que** le tube de guidage est animé d'un mouvement de va-et-vient synchrone parallèle à l'axe du rouleau de grande longueur avec le rouleau de revêtement ainsi que le rouleau de pression

9. Procédé selon au moins l'une quelconque des revendications précédentes, **caractérisé en ce que** le cas échéant le tube de guidage, le rouleau de revêtement ainsi que le rouleau de pression sont fixés sur un bras qui réalise le mouvement axial avec le cas échéant le tube de guidage, le rouleau de revêtement ainsi que le rouleau de pression.

10. Procédé selon au moins l'une quelconque des revendications précédentes, **caractérisé en ce que** la bande adhésive est une couche de masse adhésive pure (qui peut à son tour être constituée par une, deux ou plus de deux couches de masse adhésive), un matériau support apprêté sur une face avec une masse adhésive ou un matériau support apprêté sur les deux faces avec une masse adhésive.

11. Procédé selon au moins l'une quelconque des revendications précédentes, **caractérisé en ce que** le procédé est réalisé en continu.
